# DEMANDE DE BREVET EUROPEEN

(11) **EP 0 834 423 A1**
(43) Date de publication de la demande: **08.04.1998**
(21) Numéro de dépôt: 97490034.2
(22) Date de dépôt: 07.10.1997
(51) Int. Cl.: B60N 3/04

(54) **Tapis, en particulier tapis de sol accessoire pour véhicule automobile**

(30) Priorité: 07.10.1996 FR 9612398
(71) Demandeur: Fabrication d'Accessoires de Carrosserie pour Automobiles et Motos FACAM, 59115 Leers (FR)
(72) Inventeur: De Gastines, Christophe, 59420 Mouvaux (FR)
(74) Mandataire: Hénnion, Jean-Claude

(57) **Abrégé**

Le tapis de l'invention est constitué d'une couche plastique fixée éventuellement, comme sous-couche, sous un revêtement extérieur textile. Il possède une structure préformée avec une partie plane (6) et, sur toute sa périphérie sauf éventuellement sa partie avant (1b) un rebord relevé (2) ayant une configuration en U retourné dont l'extrémité libre (4a) de la branche extérieure (4) est sensiblement dans le plan (DD') de la face inférieure (6a) de la partie plane (6).

De préférence s'agissant d'un tapis de sol accessoire pour véhicule automobile, le rebord relevé (2) s'étend sur trois côtés d'une partie rectangulaire (1a) de la périphérie du tapis (1), à savoir le côté arrière et deux côtés latéraux d'égale longueur.

## Description

La présente invention concerne un tapis et plus particulièrement un tapis de sol destiné à protéger le plancher d'une automobile ou d'un autre véhicule, de manière accessoire, c'est-à-dire d'un plancher qui est déjà revêtu d'une garniture de protection du type moquette. Elle concerne plus particulièrement un tel tapis qui est constitué d'une couche plastique fixée éventuellement, comme sous-couche, sous un revêtement extérieur textile.

Un tapis de sol accessoire pour automobile est déjà connu notamment par le document EP 220 305. Le problème visé dans ce document est de développer un tapis de sol accessoire d'automobile qui évite les problèmes de glissement de tapis et qui en même temps constitue un tapis de sol attrayant, facile à enlever, et ne nécessitant pas de finition de bord. Ce problème est résolu, selon le document EP 220 305, par un tapis fabriqué sous la forme d'une structure de moquette composite à partir d'une couche de moquette solidarisée à une feuille de renforcement en mousse cellule ouverte par une couche médiane en matière extrudée thermoformable. De manière également caractéristique, ce tapis comporte des rebords relevés, qui s'étendant vers l'extérieur, sont tournés vers le bas. Le tapis est dimensionné et configuré de façon à ce que les bords tournés vers le bas, dénommés encore dans le texte bords roulés, viennent en butée contre la périphérie du fond de plancher moquetté dans lequel le tapis est placé, ce qui exclut un déplacement dudit tapis.

Le tapis conforme à ce qui est décrit dans ce document antérieur EP 220 303 de même que dans le document DE-A-1 191 701 est conformé pour venir s'encastrer dans un logement en forme de cuvette, dont le fond est constitué par le plancher proprement dit et dont les montants latéraux, formant la périphérie, sont constitués à gauche par le longeron de la caisse du véhicule, à droite par le tunnel de transmission, s'agissant de l'emplacement du conducteur. Comme cela apparaît très clairement à l'examen des figures du document DE-A-1 191 701, le rebord relevé est destiné à venir s'adapter le plus exactement possible le long de la périphérie du logement, en s'appliquant sur les montants latéraux dudit logement.

Ce type de tapis de sol accessoire est obligatoirement spécifique d'un modèle de véhicule automobile donné. En effet, dans le cas où le contour du plancher à protéger n'est pas strictement conforme à la configuration des bords relevés du tapis, il s'en suit un certain jeu qui peut provoquer des déplacements rédhibitoires du tapis à l'occasion des opérations normales de conduite du véhicule.

L'objet de la présente invention ne concerne pas un tapis de ce type, mais concerne un tapis dont la configuration extérieure n'est pas strictement adaptée à une configuration donnée, en particulier la configuration du contour du plancher à protéger. Il s'agit donc d'un tapis qui a une forme standard permettant notamment son positionnement sur le plancher d'une gamme étendue de modèles de voitures.

Il existe bien sûr des tapis de ce type qui ne comportent pas de bord relevé, étant constitué par une pièce plane, avec une couche plastique fixée éventuellement comme sous-couche, sous un revêtement extérieur textile ; les bords d'un tel tapis sont généralement finis par surjetage d'un fil de lisière, améliorant l'esthétique du tapis, et évitant un éventuel effilochage du revêtement textile au niveau des découpes périphériques.

Lorsque l'utilisateur veut nettoyer ce tapis, il le retire de son logement et constate bien souvent la présence sur la garniture de protection constituant le fond dudit logement qu'il teste des cailloux ou autres détritus soit que ceux-ci étaient sur le tapis et se sont échappés lors du retrait de celui-ci soit qu'ils s'étaient logés en dehors des limites du tapis.

Le but que s'est fixé le demandeur est de proposer un tapis de ce second type qui pallie l'inconvénient précité en évitant que les cailloux ou autre détritus ne se retrouvent sur la garniture de protection du type moquette revêtant d'origine le plancher du véhicule. Ce but est parfaitement atteint par le tapis, en particulier tapis de sol accessoire pour véhicule automobile, de l'invention qui, de manière connue, est constitué d'une couche plastique fixée éventuellement comme sous-couche, sous un revêtement extérieur textile.

De manière caractéristique ce tapis possède une structure préformée avec une partie plane et, sur toute sa périphérie ou, s'agissant d'un tapis de sol accessoire pour tapis automobile sur toute sa périphérie sauf sur la partie avant, un rebord relevé ayant une configuration en U retourné dont l'extrémité libre de la branche extérieure est sensiblement dans le plan de la face inférieure de la partie plane.

Les cailloux ou autres détritus, notamment ceux qui entrent dans la voiture, sont entraînés par les pieds de l'utilisateur. Ils tombent naturellement sur le tapis et donc sur la partie plane de celui-ci. Les rebords relevés empêchent lesdits cailloux ou détritus de s'échapper en dehors du tapis. Lorsque l'usager retire le tapis, notamment de son logement, les cailloux sont retenus sur le tapis par les rebords.

La forme particulière des rebords avec leur configuration en U retournée dont la branche extérieur s'étend vers le bas jusqu'au niveau de la face inférieure de la partie plane du tapis permet une très grande stabilité du tapis sur le sol ou sur le fond du plancher et surtout empêche toute déformation du rebord y compris lorsque l'utilisateur pose le pied sur ledit rebord. En effet étant donné que le tapis de l'invention a une dimension qui n'est pas obligatoirement adaptée à la configuration du modèle de la voiture, le rebord peut se trouver à une certaine distance par exemple du montant latéral correspondant aux organes de transmission; il peut donc arriver fréquemment que l'utilisateur pose le pied sur ce rebord. Pour conserver l'efficacité dudit rebord vis-à-vis du maintien en place des cailloux ou détritus divers, il est indispensable que ce rebord ne subisse pas de déformation irréversible, cassure ou autres désagréments à l'occasion de la pose du pied de l'utilisateur. Ce résultat est atteint par la forme particulière du rebord en U retourné dont l'extrémité libre de la branche extérieure est sensiblement dans le plan de la face inférieure de la partie plane du tapis. Il en est de même lorsqu'il s'agit d'un tapis du type paillasson ou tapis de bain.

De préférence s'agissant d'un tapis accessoire pour véhicule automobile, le rebord relevé s'étend sur trois côtés d'une partie rectangulaire de la périphérie du tapis, à savoir le côté arrière et deux côtés latéraux d'égale longueur.

Dans cette configuration particulière, la partie avant du tapis se trouve au-delà d'une ligne reliant les emplacements extrêmes du rebord relevé, ladite ligne étant parallèle au côté arrière du tapis. Etant donné que le fond du plancher situé au niveau des pédales d'accélération, de freinage et d'embrayage est généralement incliné, il est nécessaire que le tapis puisse suivre cette inclinaison. On a donc une ligne de pliage du tapis, cette ligne est dans le cas du tapis accessoire pour véhicule automobile de l'invention située au niveau ou à l'avant de la ligne reliant les deux emplacements extrêmes du rebord relevé.

De façon à augmenter la capacité de non déformation du rebord relevé et également à augmenter la rigidité de ce rebord, de manière caractéristique selon l'invention ledit rebord, au niveau d'un emplacement extrême, est fermé par un rebord transversal ou semi-tronconique. De la sorte les deux branches du U retourné sont reliées entre elles par ce rebord transversal ou semi-tronconique, ceci évite toute déformation en cas d'écrasement du rebord relevé dans la zone de l'emplacement extrême correspondant.

Avantageusement au niveau d'un emplacement extrême donné, la partie plane du tapis s'étend dans le prolongement des branches extérieures du rebord en U retourné.

La présente invention sera mieux comprise à la lecture de la description qui va être faite d'un exemple préféré de réalisation d'un tapis de sol accessoire pour véhicule automobile, illustré par le dessin annexé dans lequel :
- la figure 1 est une représentation de dessus d'un exemple de tapis accessoire pour véhicule automobile,
- la figure 2 est une représentation schématique en coupe selon la ligne 2-2 du tapis de la figure 1,
- la figure 3 est une représentation schématique en perspective partielle d'un emplacement extrême du rebord relevé du tapis,
- et la figure 4 est une représentation schématique en perspective d'un exemple de tapis du type paillasson ou tapis de bain.

Le premier exemple de tapis 1 est un tapis de sol destiné à protéger le plancher d'une automobile ou d'un autre véhicule, de manière accessoire, c'est-à-dire un plancher qui est déjà revêtu d'une garniture de protection du type moquette.

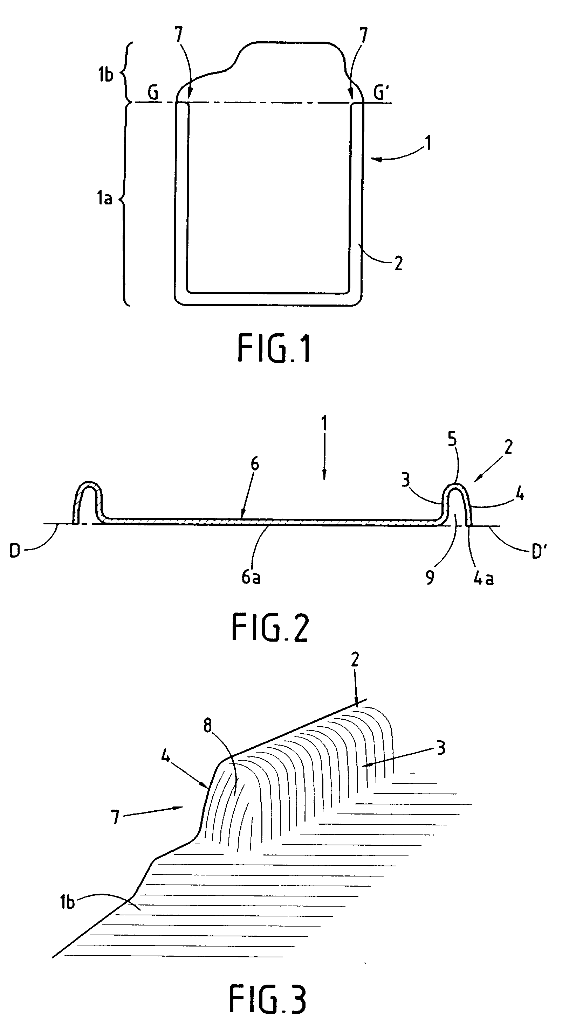

Ce tapis 1 qui est illustré aux figures 1 à 3, comporte une partie globalement rectangulaire la et une partie avant 1b dont le contour est découpé pour tenir compte du volume intérieur de l'habitacle au niveau du plancher, notamment la présence de la roue et des organes de transmission, sensiblement au niveau des pédales.

Le tapis 1 est constitué d'une couche plastique, thermoformable, qui est fixée comme sous-couche sous un revêtement extérieur textile.

De manière caractéristique, selon l'invention, 1a partie la rectangulaire du tapis 1 comporte sur tout son pourtour un rebord relevé 2 qui présente une forme en U renversée, comme cela apparaît clairement à l'examen de la figure 2 ; cette forme en U est obtenue par une simple opération de thermoformage.

Plus précisément le U renversé comporte deux branches 3, 4 respectivement la branche intérieure 3 et la branche extérieure 4 reliées entre elles par une portion coudée 5. La branche extérieure 4 a son extrémité libre 4a qui est sensiblement dans le plan DD' de la face inférieure 6a de la partie plane 6 du tapis 1. De la sorte, lorsque le tapis 1 est placé à plat sur le plancher de l'automobile, l'assise du tapis est obtenue grâce à l'application de la face inférieure 6a de la partie plane 6 et également grâce à l'application de l'extrémité 4a de la branche extérieure 4 du rebord 2 en U retourné sur tout le pourtour de la partie 1a dudit tapis 1.

La présence de cette extrémité libre 4a contribue à améliorer la résistance au glissement du tapis 1 du fait qu'elle constitue une ligne de freinage quelque soit la direction dans laquelle le tapis est forcé à se déplacer sur la moquette. La force de freinage est d'autant plus importante que la moquette sur laquelle est placé le tapis présente une structure textile fibreuse ou à boucles, permettant l'accrochage de l'extrémité 4a dans lesdites fibres ou lesdites boucles. Cet effet est encore accentué dans le cas où la finition de l'extrémité 4a est obtenue lors de l'opération de thermoformage, par une découpe appropriée en biseau, facilitant la pénétration de cette extrémité 4a dans les boucles de la moquette.

La présence du rebord relevé 2 sur les trois côtés de la partie la rectangulaire permet de constituer, autour de la partie plane 6 intérieure une sorte de cuvette, apte à collecter les cailloux ou détritus divers apportés par les chaussures de l'utilisateur lorsqu'il rentre dans son véhicule automobile. Ainsi lors du nettoyage du tapis, il n'a aucun risque à ce que les cailloux ou détritus s'échappent du tapis pour retomber sur la moquette.

De plus la configuration en U renversé confère au rebord relevé 2 une rigidité extrême évitant toute déformation dudit bord 2 même dans le cas où l'utilisateur pose le pied sur ledit rebord. Dans ce cas, du fait que l'extrémité libre 4a de la branche extérieure 4 s'applique sur la moquette, on observe une pénétration éventuelle de cette extrémité libre dans la moquette et non un écrasement de la portion coudée 5.

La partie 1a de forme rectangulaire du tapis 1 se termine au niveau des emplacements extrêmes 7 du bord relevé 2. Au delà de ces emplacements extrêmes 7, le tapis 1, dans sa partie avant 1b, est exempt de bord relevé. De ce fait ne subsiste dans cette partie avant 1b que la partie plane 6 du tapis qui peut facilement se plier pour suivre l'inclinaison du plancher au niveau de l'emplacement des pédales. On obtient un pliage préférentiel au niveau et au-dessus de la ligne GG' qui relie les deux emplacements extrêmes 7.

Sur la figure 3 on a représenté la finition particulière d'un emplacement extrême 7. Le rebord relevé 2 est à cet endroit terminé par un rebord 8 transversal ou semi-tronconique s'étendant entre les deux branches intérieure 3 et extérieure 4 du U retourné et obturant l'espace intérieur 9 dudit U. Cette terminaison, notamment de forme semi-tronconique, confère un caractère esthétique marqué mais surtout apporte une rigidité complémentaire au bord relevé 2 dans la zone de l'emplacement extrême 7 correspondant.

Sur la figure 3 on a également représenté la jonction entre la partie plane 6 de la partie avant 1b du tapis 1 et le rebord relevé 2 au niveau de l'emplacement extrême 7. Dans ce cas la partie 1b s'étend dans le prolongement de la branche extérieure 4 du rebord 2. Cette disposition particulière facilite la formation du bord relevé 2 et sa finition de forme transversale ou semi-tronconique 8 lors de l'opération de thermoformage.

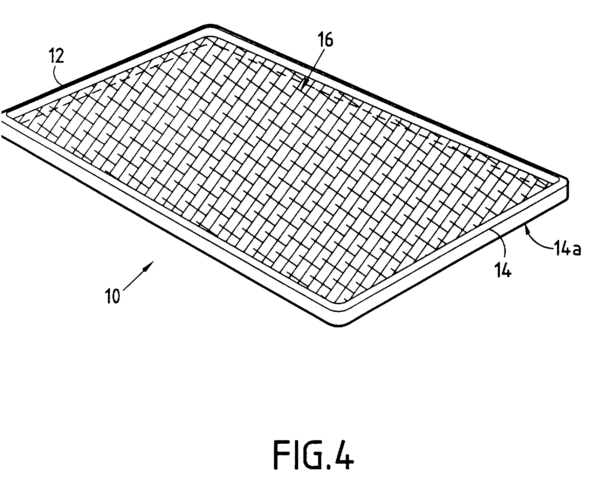

Dans le deuxième exemple de tapis, selon l'invention, illustré à la figure 4, il s'agit d'un tapis du type paillasson ou salle de bain qui est destiné à être posé simplement sur le sol. Ce tapis 1O est constitué d'une couche plastique fixée éventuellement, comme sous-couche, sous un revêtement extérieur textile. Il possède comme dans le premier exemple une structure préformée avec une partie plane 16 et sur toute sa périphérie un rebord relevé 12 ayant une configuration en U retourné dont l'extrémité libre 14a de la branche extérieure 14 est sensiblement dans le plan DD' de la face inférieure 16a de la partie plane 16. On retrouve dans ce tapis 1O les mêmes avantages que ceux qui ont été décrits pour le premier exemple, la partie intérieure plane formant le fond d'une cuvette délimitée par le rebord relevé 14 , cette cuvette constituant un réceptacle pour les détritus et cailloux laissés par l'utilisateur lorsqu'il se frotte les pieds sur le tapis, s'agissant notamment d'un tapis du type paillasson. Bien sûr le revêtement extérieur textile doit être adapté , de manière classique, en fonction de l'usage final du tapis.

## Revendications

1. Tapis de sol accessoire pour véhicule automobile constitué d'une couche plastique fixée éventuellement, comme sous-couche, sous un revêtement extérieur textile, caractérisé en ce qu'il possède une structure préformée avec une partie plane (6) et, sur toute sa périphérie sauf sur la partie avant (1b), un rebord relevé (2) ayant une configuration en U retourné dont l'extrémité libre (4a) de la branche extérieure (4) est sensiblement dans le plan (DD') de la face inférieure (6a) de la partie plane (6).

2. Tapis selon la revendication 1 caractérisé en ce que le rebord relevé (2) s'étend sur trois côtés d'une partie rectangulaire (1a) de la périphérie du tapis (1), à savoir le côté arrière et deux côtés latéraux d'égale longueur.

3. Tapis selon l'une des revendications 1 ou 2 caractérisé en ce que le rebord relevé (2), au niveau d'un de ses emplacements extrêmes (7), est fermé par un rebord transversal ou semi-tronconique (8).

4. Tapis selon l'une des revendications 1 à 3 caractérisé en ce qu'au niveau d'un emplacement extrême donné (7) du rebord relevé (2), la partie plane (6) du tapis s'étend dans le prolongement de la branche extérieure (4) dudit rebord (2).

5. Tapis (1O) du type paillasson ou tapis de bain constitué d'une couche plastique fixée éventuellement, comme sous-couche, sous un revêtement extérieur textile, caractérisé en ce qu'il possède une structure préformée avec une partie plane (16) et, sur toute sa périphérie, un rebord relevé (12) ayant une configuration en U retourné dont l'extrémité libre (14a) de la branche extérieure (14) est sensiblement dans le plan (DD') de la face inférieure (16a) de la partie plane (16).
